Europäisches Patentamt

European Patent Office

Office européen des brevets

(11) Veröffentlichungsnummer : **0 057 485**

**B1**

(12) # EUROPÄISCHE PATENTSCHRIFT

(45) Veröffentlichungstag der Patentschrift :
30.12.86

(21) Anmeldenummer : 82200101.2

(22) Anmeldetag : 28.01.82

(51) Int. Cl.⁴ : **H 02 P   5/40, H 01 J 35/26**

(54) **Antriebseinrichtung für eine Drehanoden-Röntgenröhre.**

(30) Priorität : 04.02.81 DE 3103630

(43) Veröffentlichungstag der Anmeldung :
11.08.82 Patentblatt 82/32

(45) Bekanntmachung des Hinweises auf die Patenterteilung : 30.12.86 Patentblatt 86/52

(84) Benannte Vertragsstaaten :
DE FR GB NL

(56) Entgegenhaltungen :
EP-A- 0 017 403
EP-A- 0 022 267
FR-A- 2 091 903
GB-A- 2 034 938
US-A- 3 832 553
US-A- 3 971 972
ELEKTRIE, Band 35, Nr. 6, 1981, Berlin (DDR), J.
BÜTTNER et al. "Steuergerät für einen nach dem
Unterschwingverfahren gesteuerten Wechselrichter", Seiten 318-320

(73) Patentinhaber : **Philips Patentverwaltung GmbH
Billstrasse 80
D-2000 Hamburg 28 (DE)
DE
N.V. Philips' Gloeilampenfabrieken
Groenewoudseweg 1
NL-5621 BA Eindhoven (NL)
FR GB NL**

(72) Erfinder : **Vogler, Gerd
Oldendörp 41
D-2000 Hamburg 63 (DE)**

(74) Vertreter : **Hartmann, Heinrich, Dipl.-Ing. et al
Philips Patentverwaltung GmbH Billstrasse 80 Postfach 10 51 49
D-2000 Hamburg 28 (DE)**

## Beschreibung

Die Erfindung betrifft eine Antriebseinrichtung nach dem Oberbegriff des Hauptanspruchs. Eine solche Antriebseinrichtung ist im wesentlichen aus der GB-A-2 034 938 bekannt ; allerdings ist die bekannte Einrichtung ohne Angabe eines bevorzugten Anwendungsgebietes, d. h. nicht im Zusammenhang mit dem Antrieb einer Drehanoden-Röntgenröhre beschrieben. Bei der bekannten Antriebseinrichtung wird das größtmögliche Antriebsmoment jeweils dann erreicht, wenn zwischen Rotorstrom und Rotorspannung eine Phasenverschiebung von 45° besteht. Da Rotorstrom und Rotorspannung bei einem Induktionsmotor in der Regel nicht erfaßt werden können, wird stattdessen die Phasenverschiebung zwischen Statorstrom und Statorspannung gemessen und die Frequenz des Taktgenerators wird in Abhängigkeit von Lastschwankungen so geregelt, daß sich zwischen Statorspannung und Statorstrom eine Phasenverschiebung von 45° ergibt. Die gewünschte gleich große Phasenverschiebung zwischen Rotorspannung und Rotorstrom ergibt sich jedoch nur, wenn ein Asynchronmotor mit kleinem Luftspalt verwendet wird.

Diese Voraussetzung ist bei einer Antriebseinrichtung für eine Drehanoden-Röntgenröhre nicht gegeben. Der Rotor befindet sich nämlich innerhalb des Kolbens der Drehanoden-Röntgenröhre und führt Hochspannungspotential, während der Stator außerhalb des Kolbens angeordnet ist und nahezu Erdpotential führt, was einen relativ großen Luftspalt zwischen Rotor und Stator erfordert.

Weiterhin ist aus der DE-AS-20 53 077 eine Antriebseinrichtung für eine Drehanoden-Röntgenröhre mit einem Asynchronmotor bekannt, dessen Statorwicklungen über je einen Schaltverstärker mit einem Wechselstrom mit vorgebbarer Frequenz gespeist werden. Die Schaltverstärker sind dabei Teil eines Wechselrichters, der zur Speisung des Einphasen-Asynchronmotors mit Haupt- und Hilfsstatorwicklung zwei Rechteckspannungen mit gesteuerter Frequenz und einem Tastverhältnis 1 : 1 erzeugt, die zeitlich um eine Viertelperiode gegeneinander versetzt sind. Die Frequenz wird dabei entsprechend dem Kippmomentenverlauf des Asynchronmotors erhöht.

Nachteilig an der bekannten Antriebseinrichtung ist, daß die Rechteckspannungen Oberwellen im Strom durch die Statorwicklungen erzeugen, die den Wirkungsgrad herabsetzen. Die Amplitude des Wechselstroms durch die Statorwicklungen ist nicht steuerbar und hängt von der jeweiligen Frequenz ab, weil die Impedanz der Statorwicklung frequenzabhängig ist.

Weiterhin ist aus der EP-A-122 267 ein elektrischer Fahrzeugantrieb bekannt, der mittels eines Pulsbreitenmodulators eine dreiphasige Spannung für einen Induktionsmotor erzeugt. Die Frequenz dieser dreiphasigen Spannung ist gleich der Drehzahl eines die Geschwindigkeit des Fahrzeuges messenden Tachogenerators, vergrößert (im Anfahrbetrieb) bzw. vermindert (im Bremsbetrieb) um die Schlupfdrehzahl. Ein Spannungs-Steuergenerator setzt diese Frequenz in einen proportionalen Spannungs-Sollwert um, der mit dem Spannungs-Istwert am Ausgang des Pulsdauermodulators verglichen wird. Ebenso wird der Strom-Istwert mit einem Sollwert verglichen. Eine Prioritätsschaltung sorgt dafür, daß jeweils die kleinere der beiden Regelabweichungen ausgeregelt wird.

Aufgabe der vorliegenden Erfindung ist es, eine Antriebseinrichtung der eingangs genannten Art so auszubilden, daß sich in den Statorwicklungen weitgehend sinusförmige Wechselströme mit vorgebbarer Frequenz und Amplitude ergeben.

Diese Aufgabe wird durch die im Kennzeichen des Hauptanspruches angegebenen Maßnahmen gelöst.

Die sinusförmigen Signale des Wechselspannungserzeugers werden durch den Pulsbreitenmodulator in eine Rechteckspannung mit fester Frequenz und einer von dem Momentanwert des sinusförmigen Signals abhängigen Dauer umgesetzt und durch den Schaltverstärker verstärkt. Das Ausgangssignal kann direkt mit den Statorwicklungen verbunden werden, weil die Trägerfrequenz des Pulsbreitenmodulators zur Erzeugung der Sinusform wesentlich höher sein muß als die resultierende Antriebsfrequenz für den Stator. Somit überwiegt der induktive Anteil des Statorwiderstandes und der Strom durch die Wicklungen ist dem Integral der Rechteckspannungen proportional — d. h. er ist sinusförmig.

Der Strom durch die Statorwicklungen wird durch je ein Strommeßglied, z. B. einen Stromwandler, gemessen und in einer Vergleichsschaltung mit einem vorgebbaren Sollwert verglichen. Durch die Kopplung zwischen der Vergleichsschaltung und dem Wechselspannungserzeuger bzw. dem Pulsbreitenmodulator wird die Pulsdauer zusätzlich im Sinne einer Regelung variiert, so daß die Differenz zwischen Soll- und Istwert des Stromes durch die Statorwicklungen einem Minimum zustrebt. Wenn beispielsweise der Strom durch eine Statorwicklung zu groß ist, kann die Regelung z. B. dadurch erfolgen, daß die Amplitude der dem Pulsbreitenmodulator zugeführten sinusförmigen Wechselspannung durch die Vergleichsschaltung herabgesetzt wird.

Die Wechselspannungserzeuger müssen dabei nur für eine relativ kleine elektrische Leistung ausgelegt sein. Die Frequenz des sinusförmigen Wechselstromes in den Statorwicklungen kann dabei durch Änderung der Frequenz der vom Wechselspannungserzeuger erzeugten sinusförmigen Spannung erzeugt werden ; Wechselspannungserzeuger für sinusförmige Wechselspannungen mit steuerbarer Frequenz für relativ niedrige Ausgangsleistungen sind mit relativ geringem Aufwand herzustellen.

Der Regelkreis ändert die Frequenz der sinusförmigen Wechselspannung durch Änderung der Taktfrequenz des Taktgenerators, und zwar so, daß die Frequenz des Stromes in den Statorwicklungen jeweils um die Schlupfdrehzahl größer oder kleiner — je nachdem ob der Drehzahl-Sollwert den Drehzahl-Istwert um einen vorgebbaren Betrag über- oder unterschreitet — als die Drehzahl des Rotors ist, was zur Folge hat, daß die Beschleunigung bzw. Abbremsung des Rotors jeweils mit dem höchsten Drehmoment erfolgt. Von besonderem Vorteil ist, daß nur zwei Werte vorgegeben werden müssen (die Solldrehzahl und die Schlupfdrehzahl), obwohl die Frequenz des Stromes in den Statorwicklungen ständig variiert werden muß.

Die Erfindung wird nachstehend anhand der Zeichnungen näher erläutert. Es zeigen

Figur 1   ein Blockschaltbild einer erfindunsgemäßen Antriebseinrichtung,

Figur 2   den zeitlichen Verlauf der Ein- und Ausgangsspannungen eines Pulsbreitenmodulators, und

Figur 3   den zeitlichen Verlauf der Drehzahl und der Frequenz des Stromes durch die Statorwicklungen während einer Röntgenuntersuchung.

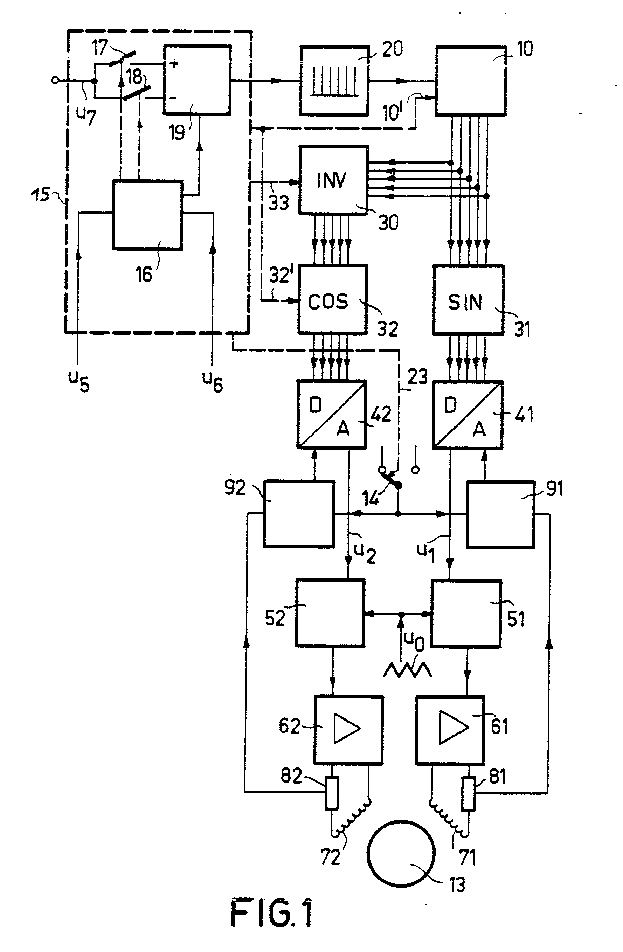

In Fig. 1 ist mit 10 ein modulo-32-Zähler bezeichnet, der die Taktimpulse eines Taktgenerators 20 mit elektronisch steuerbarer Frequenz zählt und dessen Ausgangssignal, das nach jeweils 32 Taktimpulsen den gleichen Zählerzustand hat, parallel den Adreßeingängen eines Festwertspeichers (PROM) 31 zugeführt wird, in dessen Speicherplätzen eine Sinusfunktion gespeichert ist, deren Werte entsprechend dem jeweiligen Zählerstand zyklisch aufgerufen und über einen nachgeschalteten multiplizierenden Digital-Analog-Wandler 41 in ein analoges, zeitlich nahezu sinusförmig verlaufendes Signal umgewandelt werden.

In entsprechender Weise steuert der Zählerstand des Binärzählers 10 über eine digitale Invertierschaltung 30 einen Festwertspeicher 32, der den gleichen Aufbau haben kann wie der Festwertspeicher 31 und in dem die Werte einer Kosinusfunktion gespeichert sind, die mittels eines weiteren multiplizierenden Digital-Analog-Wandlers 42 in ein analoges, zeitlich kosinusförmig verlaufendes Signal umgesetzt werden, so daß die Ausgangsspannungen der Digital-Analog-Wandler zeitlich gegeneinander um 90° versetzt sind. Das über die gestrichelt angedeutete Steuerleitung 33 steuerbare digitale Invertierglied 30 gibt entweder den Zählerstand des Zählers 10 unverändert an den Festwertspeicher 32 weiter oder es addiert ihm (modulo 32) den Wert 16 hinzu, wodurch die Kosinuswerte aufgerufen werden, die um 180° versetzt sind, so daß die Ausgangsspannung des Digital-Analog-Wandlers 42 über die Steuerleitung 33 um 180° gedreht werden kann. Anstelle des Kosinus-Festwertspeichers 32 kann auch ein Sinus-Festwertspeicher benutzt werden, wenn zu dem Zählerstand der Wert 8 addiert wird, bevor er den Adreßeingängen dieses Speichers zugeführt wird.

Die Ausgangssignale $u_1$ bzw. $u_2$ der Digital-Analog-Wandler 41 bzw. 42 werden je einem Pulsbreitenmodulator 51 bzw. 52 zugeführt, deren Modulations-Eingängen weiterhin eine Dreieckspannung $u_0$ zugeführt wird, deren Frequenz (z. B. 20 kHz) groß im Vergleich zur höchsten Frequenz der Signale $u_1$, $u_2$ und deren Amplitude stets größer als die Amplitude der Signale $u_1$, $u_2$ ist.

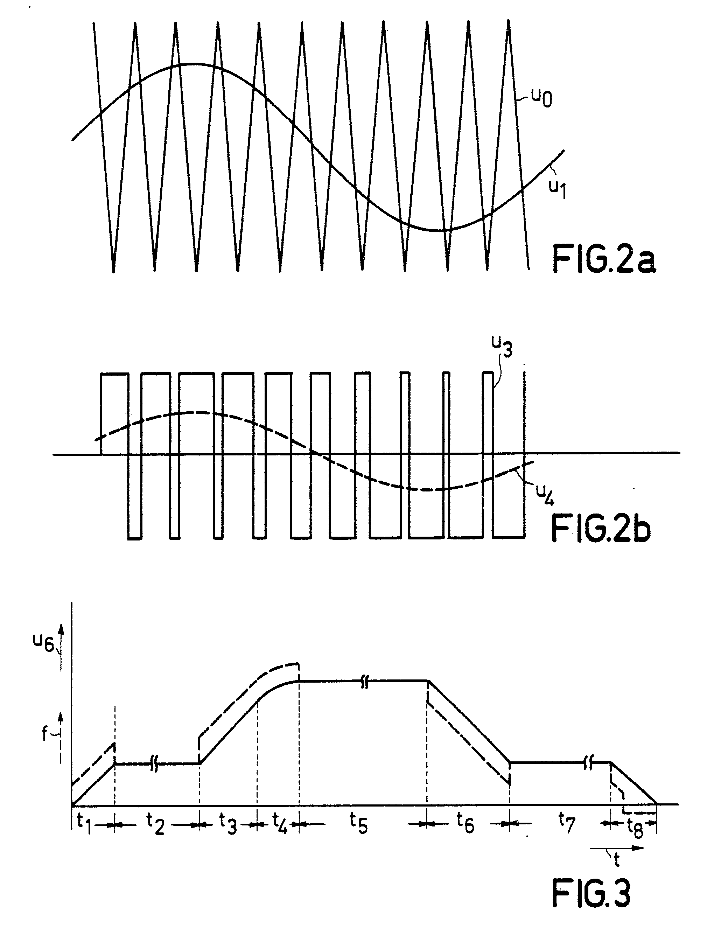

In Fig. 2a ist der zeitliche Verlauf der Spannungen $u_1$ und $u_0$ dargestellt, wobei zu bemerken ist, daß die Frequenz der Spannung $u_0$ in Wirklichkeit viel größer ist. Wenn der zugehörige Pulsbreitenmodulator (51) beispielsweise als Komparator ausgebildet ist, dessen Ausgangsspannung immer dann positiv ist, wenn $u_1$ positiver ist als $u_0$ und dessen Ausgangsspannung immer dann negativ ist, wenn $u_1$ negativer ist als $u_0$, ergibt sich als Ausgangsspannung des Pulsbreitenmodulators 51 die in Fig. 2b mit $u_3$ bezeichnete, rechteckförmige und pulsbreitenmodulierte Spannung, deren zeitlicher Mittelwert in Fig. 2b gestrichelt angedeutet und mit $u_4$ bezeichnet ist.

Die Ausgangsspannungen der Pulsbreitenmodulatoren 51 und 52 werden Schaltverstärkern 61 und 62 zugeführt, deren — ungeglättete — Ausgangsspannung den gleichen zeitlichen Verlauf hat wie die Ausgangsspannung der vorgeschalteten Amplitudenmodulatoren. Die Schaltverstärker können den gleichen Aufbau haben wie in der DE-AS 20 53 077 beschrieben. Dabei besteht jeder Schaltverstärker aus vier in Brückenschaltung betriebenen steuerbaren Schaltelementen, von denen jeweils zwei in gegenüberliegenden Zweigen befindliche Schaltelemente leitend und die beiden anderen gesperrt sind und deren Steuereingänge gegebenenfalls über einen nicht näher dargestellten Übertrager zur Potentialtrennung mit den Ausgängen der Pulsbreitenmodulatoren gekoppelt sind. Dabei müssen Vorkehrungen getroffen werden, um zu verhindern, daß alle Schaltelemente gleichzeitig leitend sind. Als Schaltelemente können u. a. verwendet werden Transistoren, insbesondere sogenannte Power-MOS-FETs, oder GTO-Thyristoren.

An die Ausgänge der beiden Schaltverstärker 61 und 62 sind die beiden Statorwicklungen 71 bzw. 72 eines Einphasen-Asynchronmotors angeschlossen, dessen schematisch angedeuteter Rotor 13 starr mit der nicht näher dargestellten Drehanode der Röntgenröhre verbunden ist. Der Anschluß kann über ein Glättungsfilter erfolgen ; jedoch können die Statorwicklungen auch direkt an die Ausgänge der Schaltverstärker angeschlossen sein, weil die Impedanzen der Schaltverstärker bei den Schaltfrequenzen nahezu induktiv sind, so daß der Strom durch die Wicklung dem zeitlichen Integral der modulierten Rechteckspannung entspricht. Der die Statorwicklungen 71 bzw. 72 durchfließende Strom wird von einem Strom-Meßglied 81 bzw. 82, z. B. einem Stromwandler, gemessen und dem Eingang einer Vergleichsschaltung 91 bzw. 92 zugeführt, deren anderem Eingang ein mittels eines Schalters 14 umschaltbarer Sollwert für den Strom durch die jeweilige Statorwicklung zugeführt wird. Die Vergleichsschaltungen 91 bzw. 92 vergleichen diesen Sollwert mit dem Spitzenwert des Stromes durch die Statorwicklungen (zu diesem Zweck können die Vergleichseinrichtungen 91, 92 je einen Spitzenwert-Gleichrichter enthalten) und erzeugen je ein Ausgangssignal, das der Differenz der beiden Werte entspricht. Diese Ausgangssignale werden als Referenzspannungen den multiplizierenden Digital-Analog-Wandlern 41 bzw. 42 zugeführt, so daß deren Ausgangssignal dem Produkt des digitalen Ausgangssignals des Festwertspeichers 31 bzw. 32 und des analogen Ausgangssignals der Vergleichsschaltung 91 bzw. 92 entspricht. Die Polarität der Ausgangssignale der Vergleichsschaltungen 91 und 92 muß dabei so gewählt sein, daß sich eine Regelung des Stromes durch die Statorwicklungen auf den mittels des Schalters 14 vorgegebenen Sollwert ergibt. Durch diese Stromregelung ist gewährleistet, daß der Strom durch die Statorwicklungen 71, 72 trotz deren frequenzabhängiger Impedanz unabhängig von der Frequenz der Wechselspannungen an den Ausgängen der Digital-Analog-Wandler 41 und 42 ist.

Der Taktgenerator 20 mit steuerbarer Taktfrequenz kann beispielsweise ein Spannungs-Frequenzwandler sein mit einem linearen Zusammenhang zwischen Eingangsspannung und Taktfrequenz. In diesem Fall muß lediglich die Eingangsspannung des Taktgenerators 20 verändert werden, um eine Änderung der Frequenz des sinusförmigen Ausgangssignals zu erreichen. Die Eingangsspannung ist dann jeweils entsprechend dem gewünschten Drehzahlverlauf zu ändern. Zu diesem Zweck ist eine Steuereinrichtung 15 vorgesehen, die einen Komparator 16 enthält der den Sollwert $u_5$ der Drehzahl der Drehanode mit dem Istwert $u_6$ vergleicht. Die Drehzahl kann direkt gemessen werden, wie aus der US-PS-3 214 589 bekannt, und in das dazu proportionale Istwertsignal $u_6$ umgesetzt werden. Es ist jedoch auch eine indirekte Messung möglich, wie sie z. B. in der DE-OS-27 32 852 beschrieben ist. Der Sollwert kann je nach Untersuchungsart an einem von mehreren Potentiometern abgegriffen oder von einem Mikroprozessor vorgegeben werden. Der Komparator 16 kann zwei Schwellenanordnungen enthalten, die bewirken, daß der Schalter 17 geschlossen wird, wenn der Sollwert $u_5$ der Drehzahl um den Schwellenwert größer ist als der Istwert $u_6$ und die bewirken, daß der Schalter 18 geschlossen wird, wenn der Sollwert $u_5$ um den Schwellenwert kleiner ist als der Istwert $u_6$. Ist der Betrag der Differenz zwischen dem Sollwert und dem Istwert kleiner als der Schwellenwert, sind die beiden Schalter 17, 18 geöffnet. Die beiden Schalter 17, 18 sind an eine Spannungsquelle angeschlossen, die eine der Schlupf-Drehzahl proportionale Gleichspannung $u_7$ liefert (wobei der Quotient aus der Gleichspannung und der Schlupf-Drehzahl die gleiche Größe haben muß wie der Quotient aus der Spannung $u_6$ und dem

tatsächlichen Wert der Drehzahl). Die Schlupf-Drehzahl ist diejenige Differenz zwischen der Frequenz des Stromes in den Statorwicklungen und der Drehzahl, bei der das größtmögliche Drehmoment auf den Rotor eines Asynchronmotors ausgeübt wird. Sie ist bei vorgegebener Rotor-Stator-Konfiguration im wesentlichen konstant.

Der der Schlupf-Drehzahl proportionale Wert $u_7$ wird in einer Überlagerungsschaltung 19 zu dem Istwert $u_6$ hinzuaddiert, wenn der Schalter 17 geschlossen ist, d. h. wenn der Sollwert $u_5$ um den Schwellenwert höher ist als die Spannung $u_6$ und sie wird vom Istwert $u_6$ subtrahiert, wenn der Schalter 18 geschlossen ist, d. h. wenn der Istwert $u_6$ um den Schwellenwert größer ist als der Sollwert $u_5$. Am Ausgang der Überlagerungsschaltung 19 erscheint in diesen Fällen daher ein Signal, das der Summe $u_6+u_7$ bzw. der Differenz $u_6-u_7$ proportional ist und das vom Taktgenerator 20 in eine dazu proportionale Taktfrequenz umgesetzt wird. In diesen Fällen, insbesondere also dann, wenn plötzlich eine wesentlich höhere oder eine wesentlich niedrigere Soll-Drehzahl vorgegeben wird, wird mithin die Taktfrequenz so vorgegeben, daß die Frequenz der sinusförmigen Wechselspannungssignale $u_1$, $u_2$ um die Schlupffrequenz größer ist als die jeweilige Drehzahl, so daß das übertragene Drehmoment seinen größten Wert hat und der Rotor in der kürzestmöglichen Zeit auf die gewünschte Drehzahl beschleunigt bzw. abgebremst wird. In den anderen Fällen ist die Differenz zwischen Drehzahl und der Frequenz des Stromes praktisch Null, so daß kein Beschleunigungs- oder Verzögerungsmoment entstehen kann und die Drehanode mit nahezu konstanter Drehzahl weiterläuft. Um dabei ein Driften zu unterbinden, ist es zweckmäßig, den der Überlagerungsschaltung 19 zugeführten Wert nicht dem Istwert, sondern dem Sollwert der Drehzahl folgen zu lassen.

In Fig. 3 ist der zeitliche Verlauf der Drehzahl bzw. der Spannung $u_6$ in ausgezogenen Linien und der zeitliche Verlauf der Frequenz des Stromes in den Statorwicklungen gestrichelt, der dem zeitlichen Verlauf der Spannung am Eingang des Taktgenerators 20 bzw. der Taktfrequenz für eine typische Röntgenuntersuchung entspricht, dargestellt.

Während des Zeitintervalls $t_1$ wird der Rotor auf eine vorgegebene erste Drehzahl, z. B. 2 700 U/Min., beschleunigt. Während des Beschleunigungsvorganges ist der dieser Drehzahl entsprechende Sollwert $u_5$ stets erheblich größer als der Istwert $u_6$, so daß der Komparator 16 den Schalter 17 schließt und zu dem Istwert $u_6$ den zur Schlupf-Drehzahl proportionalen Wert $u_7$ hinzuaddiert, was zur Folge hat, daß die Frequenz des Stromes in den Statorwicklungen um die Schlupf-Drehzahl höher ist als die jeweilige Drehzahl des Rotors, wodurch dieser in kürzester Zeit auf die gewünschte Drehzahl beschleunigt wird. Wenn diese Drehzahl erreicht ist, ist $u_5 = u_6$ und der Schalter 17 wird wieder geöffnet. Die Ausgangsspannung der Überlagerungsschaltung

19 entspricht dann u₆ — bzw. wie vorstehend erläutert u₅ — und der Rotor läuft praktisch mit der gleichen Frequenz weiter. Da die hierfür erforderliche Antriebsenergie (z. B. 40 W) wesentlich geringer ist als die für die Beschleunigung erforderliche Energie, die in der Größenordnung von kW liegt, ist es zur Verringerung der Verlustleistung in den Statorwicklungen geboten, den Statorstrom abzusenken. Zu diesem Zweck wird der Statorstrom-Sollwert mittels des Schalters 14 von einem hohen Wert auf einen wesentlich niedrigeren Wert umgeschaltet. Der Schalter 14 wird auf nicht näher dargestellte Weise von der Steuereinrichtung 15 über die Leitung 23 gesteuert. Die Frequenz des Stromes in den Statorwicklungen entspricht dabei praktisch der Drehzahl. Dieser Betriebszustand ist während der Zeitspanne t₂ gegeben.

Es sei angenommen, daß am Ende des Zeitraumes t₂ eine Aufnahme gemacht werden soll, wozu eine höhere Drehzahl, z. B. 8 000 U/Min, erforderlich ist. u₅ ist dann wieder wesentlich größer als u₆, so daß der Schalter 17 geschlossen wird und am Ausgang der Überlagerungseinrichtung 19 die Summe von u₇ und u₆ erscheint. Gleichzeitig muß dann wieder der Schalter 14 auf den größeren Röhrenstrom-Sollwert umgeschaltet werden. Die Vergrößerung des Röhrenstromes hat in Verbindung mit der Erhöhung der Frequenz des Stromes zur Folge, daß der Rotor wieder beschleunigt wird und die Drehzahl zunimmt (Zeitspanne t₃). Da mit zunehmender Frequenz des Stromes in den Statorwicklungen die Impedanz der Statorwicklungen steigt, kann ein Zeitpunkt erreicht werden, bei dem der Strom durch die Statorwicklungen nicht mehr den vorgegebenen Sollwert erreicht. Die Drehzahl steigt danach langsamer an (Zeitspanne t₄), bis der Sollwert der Drehzahl erreicht ist, wonach der Schalter 17 geöffnet wird und der Schalter 14 wieder auf den kleineren Röhrenstrom-Sollwert umgeschaltet wird. Der Rotor läuft dann praktisch mit der erreichten Drehzahl weiter (Zeitspanne t₅).

Wenn sich daran z. B. wieder eine Durchleuchtung mit der niedrigeren Drehzahl anschließt, wird am Ende des Zeitraums t₅ der Sollwert u₅ auf den niedrigeren Wert abgesenkt. Da er dann wesentlich kleiner ist als der Istwert der Drehzahl, wird der Schalter 18 geschlossen, während der Schalter 14 wieder auf den größeren Sollwert umgeschaltet wird. Die Überlagerungsschaltung 19 liefert dann ein Signal, das der Differenz u₆ — u₇ proportional ist, so daß die Frequenz des Stromes in den Statorwicklungen um die Schlupf-Drehzahl niedriger ist als die jeweilige Drehzahl des Rotors. Dadurch wird der Rotor mit der größtmöglichen Verzögerung abgebremst, so daß die Rotor-Drehzahl absinkt, wodurch wiederum die Frequenz des Stromes absinkt usw. Wenn die gewünschte Drehzahl erreicht ist, gilt wieder u₅ = u₆ und der Schalter 18 wird geöffnet und der Schalter 14 auf den niedrigeren Statorstrom-Sollwert umgeschaltet, so daß der Rotor mit der erreichten Drehzahl weiterläuft (Zeitspanne t₇).

Wenn anschließend die Untersuchung ganz beendet werden soll, wird als Sollwert die Drehzahl Null vorgegeben, was ein erneutes Schließen des Schalters 18 und ein erneutes Umschalten des Umschalters 14 zur Folge hat, so daß das Ausgangssignal der Überlagerungsschaltung 19 wieder der Differenz u₆ — u₇ entspricht und die Drehzahl abnimmt. Dieser Abnahme folgt auch die Frequenz in den Statorwicklungen — allerdings um die Schlupf-Drehzahl versetzt. Wenn diese Frequenz einen vorzugsweise unterhalb der Schlupf-Drehzahl liegenden Grenzwert erreicht hat, der sich gerade noch mit vertretbarem Aufwand verarbeiten läßt, z. B. 10 Hz, wird von da an auf nicht näher dargestellte Weise die Eingangsspannung des Taktgenerators 20 auf dem erreichten Wert festgehalten, so daß sich die Frequenz des Stromes in den Statorwicklungen nicht mehr ändert. Gleichzeitig wird über die Steuerleitung 33 die digitale Invertierschaltung umgeschaltet, so daß die cos-Schwingung am Ausgang des Digital-Analog-Wandlers 42 durch eine -cos-Schwingung ersetzt wird. Das hat zur Folge, daß das Drehfeld umgekehrt wird, was ein weiteres Abbremsen nach sich zieht. Wenn die Drehzahl Null erreicht ist (u₆ = 0), wird ein Rückstellimpuls auf den Zähler 10 gegeben, so daß der Zählerstand und damit auch der Ausgang des Sinus-Festwertspeichers 31 auf Null gesetzt werden und gleichzeitig wird ein Korrektursignal auf den Kosinus-Festwertspeicher 32 gegeben, so daß dessen binäres Ausgangssignal bzw. das Ausgangssignal des Digital-Analog-Wandlers 42 ebenfalls Null wird. Der Strom in beiden Statorwicklungen ist dann Null, d. h. im Zeitpunkt des Stillstandes des Rotors 13 liegt kein beschleunigendes oder verzögerndes Feld mehr an, so daß der Rotor 13 endgültig stehen bleibt.

Wenn die beschriebene Antriebseinrichtung zum Betrieb von Röntgenröhren verwendet werden soll, deren Asynchronmotor eine abweichende Rotor-Stator-Konfiguration aufweist oder deren Anodenscheibe ein anderes Trägheitsmoment hat, muß allenfalls eine andere Schlupf-Drehzahl bzw. ein anderer Sollwert für den Strom durch die Statorwicklungen bei Beschleunigung (Bremsung) und Weiterlauf vorgegeben werden.

Die Steuereinrichtung 15 kann mit Hilfe eines Mikroprozessors realisiert werden, dem der Drehzahl-Istwert digital zugeführt wird und der auf die verschiedenen Kommandos (« Durchleuchtung », « Aufnahme » usw.) selbsttätig die Drehzahl vorgibt. In diesem Fall kann auch der Zähler 10, die digitale Invertierschaltung 30 und die Festwertspeicher 31 und 32 mit Hilfe dieses Mikroprozessors realisiert werden. Gegebenenfalls kann als Taktgenerator 20 auch ein Normfrequenzgenerator verwendet werden, dessen Frequenz wesentlich höher ist als die Taktfrequenz und dem ein durch die Steuereinrichtung 15 steuerbarer Frequenzteiler nachgeschaltet ist.

## Patentansprüche

1. Antriebsvorrichtung für eine Drehanoden-Röntgenröhre miteinem Asynchronmotor, dessen über je einen Verstärker (61, 62) mit einem Wechselstrom vorgebbarer Frequenz gespeisten Statorwicklungen (71, 72) je ein Wechselspannungserzeuger (31, 41 ; 32, 42) zugeordnet ist, mit einer Digitalschaltung, die — von einem Taktgenerator (20) gesteuert — einer Sinusfunktion bzw. einer Kosinusfunktion entsprechende digitale Signale liefert, die durch Digital-Analog-Wandler (41, 42) in analoge Signale umgesetzt werden, und mit einem die Frequenz des Taktgenerators beeinflussenden Regelkreis (15), gekennzeichnet durch folgende Merkmale :

a) die Ausgangssignale der Digital-Analog-Wandler (41, 42) werden je einem Pulsbreitenmodulator (51, 52) mit einer festen im Vergleich zur Drehzahl großen Pulsfrequenz zugeführt, der je einen der Verstärker (61, 62) steuert,

b) für jede Statorwicklung (71, 72) ist eine Stromregelung vorgesehen, wobei die Ausgangssignale von Stromsoll-/Stromistwertvergleichern (91, 92) den Digital-Analog-Wandlern (41, 42) zugeführt werden, um deren Ausgangssignale im Sinne einer Verringerung der Differenz zwischen Stromsoll- und Stromistwert zu variieren,

c) der Regelkreis steuert die Frequenz des Taktgenerators (20) derart, daß ein Kompensator (16) den Istwert ($u_6$) der Drehzahl der Röntgenröhre mit einem vorgebbaren Sollwert ($u_5$) vergleicht, daß beim Überschreiten oder Unterschreiten des Istwertes durch den Sollwert um einen vorgebbaren Betrag dem Istwert der Drehzahl ein der Schlupfdrehzahl entsprechender Wert ($u_7$) addiert bzw. subtrahiert wird, und daß das so gebildete Signal zur Frequenzsteuerung dem Taktgenerator (20) zugeführt wird.

2. Schaltungsanordnung nach Anspruch 1, dadurch gekennzeichnet, daß die Digital-Analog-Wandler (41, 42) als multiplizierende Digital-Analog-Wandler ausgebildet sind, deren Analogeingang das Ausgangssignal der zugehörigen Vergleichsschaltung (91, 92) zugeführt wird.

## Claims

1. A driving device for a rotary-anode X-ray tube, comprising an asynchronous motor whose stator windings (71, 72) are fed, via a respective amplifier (61, 62), with an alternating current of adjustable frequency, an alternating voltage generator (31, 41 ; 32, 42) being associated with each stator winding, and also comprising a digital circuit which is controlled by a clock generator (20) in order to generate digital signals which correspond to a sine function or a cosine function and which are converted into analog signals by digital-to-analog converters (41, 42), and a control circuit (15) which influences the frequency of the clock generator, characterized in that :

a) the output signals of the digital-to-analog converters (41, 42) are applied to a respective pulse-width modulator (51, 52) wich has a high pulse frequency in comparison with the number of revolutions and which controls a respective amplifier (61, 62),

b) for each stator winding (71, 72) there is provided a current control means, the output signals of current reference value/actual value comparators (91, 92) being applied to the digital-to-analog converters (41, 42) in order to vary the output signals thereof so as to reduce the difference between the current reference value and the current actual value,

c) the control circuit controls the frequency of the clock generator (20) so that a comparator (16) compares the actual value ($u_6$) of the number of revolutions of the X-ray tube with an adjustable reference value ($u_5$), a value ($u_7$) which corresponds to the slip number of revolutions being added to and subtracted from, respectively, the actual value of the number of revolutions when the actual value exceeds or drops below the reference value, respectively, by an adjustable amount, the signal thus formed being applied to the clock generator (20) for frequency control.

2. A circuit arrangement as claimed in Claim 1, characterized in that the digital-to-analog converters (41, 42) are constructed as multiplying digital-to-analog converters whose analog input receives the output signal of the associated comparison circuit (91, 92).

## Revendications

1. Mécanisme de commande pour un tube à rayons X à anode tournante comportant un moteur asynchrone, dont les enroulements de stator (71, 72) alimentés au moyen d'un courant alternatif de fréquence pouvant être prédéfinie chacun par l'intermédiaire d'un amplificateur (61, 62) sont associés chacun à un générateur de tension alternative (31, 41, 32, 42), un circuit numérique qui, sous la commande d'un générateur de signaux d'horloge (20), fournit des signaux numériques correspondant à une fonction sinus ou à une fonction cosinus qui sont convertis par des convertisseurs numériques-analogiques (41, 42) en des signaux analogiques et un circuit de réglage (15) qui influence la fréquence du générateur de signaux d'horloge, caractérisé par les particularités suivantes :

a) les signaux de sortie des convertisseurs numériques-analogiques (41, 42) sont appliqués, respectivement, à des modulateurs d'impulsions en durée (51, 52) présentant une fréquence d'impulsions fixe, élevée par rapport au nombre de tours, commandant chacun un des amplificateurs (61, 62).

b) pour chaque enroulement de stator (71, 72) est prévue une régulation d'intensité, les signaux de sortie de comparateurs de valeurs de consigne/valeurs réelles d'intensité (91, 92) étant appliqués aux convertisseurs numériques-analogiques (41, 42) pour faire varier leurs signaux de sortie dans le sens d'une diminution de la différence entre les valeurs de consigne et les valeurs réelles d'intensité,

c) le circuit de réglage pilote la fréquence du générateur de signaux d'horloge (20) d'une manière telle qu'un comparateur (16) compare la valeur réelle ($u_6$) du nombre de tours du tube à rayons X à une valeur de consigne prédéfinie ($u_5$), que dans le cas d'un dépassement par excès ou par défaut de la valeur réelle par la valeur de consigne dans une mesure prédéfinie, une valeur ($u_7$) correspondant au nombre de tours de glissement est ajoutée à la valeur réelle de la vitesse ou est soustraite de celle-ci et que le signal ainsi formé est appliqué au générateur de signaux d'horloge (20) pour le pilotage de la fréquence.

2. Mécanisme de commande suivant la revendication 1, caractérisé en ce que les convertisseurs numériques-analogiques (41, 42) ont la forme de convertisseurs numériques-analogiques multiplicateurs dont l'entrée analogique reçoit le signal de sortie du circuit comparateur (91, 92) associé.

FIG.1

FIG.2a

FIG.2b

FIG.3

2